# EUROPEAN PATENT APPLICATION

(11) **EP 3 869 382 A2**
(43) Date of publication of application: **25.08.2021**
(21) Application number: 21182564.1
(22) Date of filing: 29.06.2021
(51) Int. Cl.: G06F 40/35, G06F 40/279, G06N 20/00

(54) **METHOD AND DEVICE FOR DETERMINING ANSWER OF QUESTION, STORAGE MEDIUM AND COMPUTER PROGRAM PRODUCT**

(30) Priority: 01.12.2020 CN 202011388370
(71) Applicant: BEIJING BAIDU NETCOM SCIENCE AND TECHNOLOGY CO. LTD., 100085 Beijing (CN)
(72) Inventor: CHEN, Yuguang, Beijing, 100085 (CN); ZHOU, Xiaojin, Beijing, 100085 (CN)
(74) Representative: Isarpatent

(57) **Abstract**

A computer-implemented method includes: acquiring a first input including a first text and a question set associated with the first text, wherein the first input includes a first separation identifier for separating a plurality of questions in the question set; determining a question index for indicating a position of the first separation identifier in the first input, and a question mask for the question set, wherein the question mask is configured to screen the question set in the first input; and based on the question index, the question mask and a reading comprehension model, determining a first output corresponding to the first input for generating a plurality of answers corresponding to the plurality of questions respectively. In this way, the processing efficiency of the machine reading comprehension model on the questions can be improved.

## Description

### TECHNICAL FIELD

The present disclosure relates to the field of data processing, particularly to the fields of artificial intelligence, deep learning, machine question and answer, knowledge graph and event graph, and more particularly, relates to a method and device for determining an answer of a question, a storage medium and a computer program product.

### BACKGROUND

With the development of the computer technology, it has been possible to process various data technical solutions based on the artificial intelligence technology. For example, it has been possible to give an answer of a to-be-answered question by the machine reading comprehension technology. Machine reading comprehension (sometimes referred to as reading comprehension question and answer or reading comprehension in this specification) is a technology that enables a machine to understand a natural language text and gives corresponding answers under the condition of given questions and documents. The technology can be applied in various fields of information extraction of text question and answer, a knowledge graph and an event graph, conversational systems and the like, and is a research hotspot in recent years. In some solutions, a reading comprehension model may determine one of fragments from the text of a document as the answer of the to-be-answered question. However, the reading comprehension model usually can only process one text and one corresponding question at one time. If there are many to-be-answered questions in one text, it is needed to perform processing for many times by the reading comprehension model, and only one answer of one question is determined each time. Therefore, there is a need for a solution capable of efficiently processing a plurality of to-be-answered questions.

### SUMMARY

The present disclosure provides a method and device for determining an answer of a question, a storage medium and a computer program product.

According to a first aspect of the present disclosure, a computer-implemented method for determining an answer of a question is provided. The method includes: acquiring a first input including a first text and a question set associated with the first text, wherein the first input includes a first separation identifier for separating a plurality of questions in the question set; determining a question index for indicating a position of the first separation identifier in the first input, and a question mask for the question set, wherein the question mask is configured to screen the question set in the first input; and based on the question index, the question mask and a reading comprehension model, determining a first output corresponding to the first input for generating a plurality of answers corresponding to the plurality of questions respectively.

According to a second aspect of the present disclosure, a device for determining an answer of a question is provided. The device includes: an input acquisition module, configured to acquire a first input including a first text and a question set associated with the first text, wherein the first input includes a first separation identifier for separating a plurality of questions in the question set; a question set preprocessing module, configured to determine a question index for indicating a position of the first separation identifier in the first input, and a question mask for the question set, wherein the question mask is configured to screen the question set in the first input; and an output determination module, configured to, based on the question index, the question mask and a reading comprehension model, determine a first output corresponding to the first input for generating a plurality of answers corresponding to the plurality of questions respectively.

According to a third aspect of the present disclosure, a computer readable storage medium is provided. The computer readable storage medium has computer program instructions stored thereon, wherein the computer program instructions, when executed by a processor, cause the processor to perform the method described above.

According to a fourth aspect of the present disclosure, a computer program product is provided. The computer program product includes computer program instructions, wherein the computer program instructions, when executed by a processor, cause the processor to perform the method described above.

According to the technology of the present application, the processing efficiency of the machine reading comprehension model on the questions can be improved.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The above and other features, advantages and aspects of each embodiment of the present disclosure will become more apparent in conjunction with the accompanying drawings and with reference to the following detailed description. In the accompanying drawings, the same or similar reference numerals represent the same or similar element, wherein
FIG. 1 is a schematic diagram of an example environment where a plurality of embodiments of the present disclosure can be implemented;
FIG. 2 is a flowchart of a method for determining an answer of a question according to an embodiment of the present disclosure;
FIG. 3 is a schematic diagram of a method for determining a first output according to an embodiment of the present disclosure;
FIG. 4 is a schematic diagram of a method for determining an answer based on a first output according to an embodiment of the present disclosure;
FIG. 5 is a schematic diagram of an example of a question mask matrix according to an embodiment of the present disclosure;
FIG. 6 is a schematic block diagram of a device for determining an answer of a question according to an embodiment of the present disclosure;
FIG. 7 is a flowchart of a method for training a reading comprehension model according to an embodiment of the present disclosure;
FIG. 8 is a schematic block diagram of a device for training a reading comprehension model according to an embodiment of the present disclosure; and
FIG. 9 is a block diagram of electronic equipment capable of implementing a plurality of embodiments of the present disclosure.

### DETAILED DESCRIPTION OF EMBODIMENTS

The embodiments of the present application are described in conjunction with the accompanying drawings, including various details of the embodiments of the present application for facilitating understanding, and should be regarded as merely exemplary. Therefore, those of ordinary skill in the art should realize that various changes and modifications may be made to the embodiments described herein without departing from the scope and spirit of the present application. Similarly, for clarity and conciseness, descriptions of well-known functions and structures are omitted in the following description.

In the description of the embodiments of the present disclosure, the term "including" and the similar terms should be understood as open inclusion, that is, "including but not limited to". The term "based on" should be understood as "at least partially based on". The term "one embodiment" or "this embodiment" should be understood as "at least one embodiment". Terms "first", "second", etc. may refer to different or the same objects. Other explicit and implicit definitions may be included below.

As discussed above, in the conventional solution, for a plurality of to-be-replied questions associated with the same text, computing equipment needs to perform operation by utilizing the reading comprehension model for many times, thereby resulting in high computational overhead, slow processing and low efficiency.

In order to at least partially solve the above problems and one or more of other potential problems, the embodiment of the present disclosure provides a technical solution for determining an answer of a question. In this solution, a text and a plurality of questions associated with the text are simultaneously input into a reading comprehension model in a way that the reading comprehension model can read to acquire a feature representation of an output. An index for the plurality of questions is used to indicate positions of the plurality of questions, such that a part for each question can be determined in the feature representation of the output. Moreover, the mask for the plurality of questions is determined and used to shield mutual interference of the texts among the plurality of questions, and therefore, the feature representation for each question can interact with the feature representation of the text to determine the answer of each question. In this way, the reading understanding model can process a plurality of questions for the same document at one time, thereby improving the processing efficiency of the reading comprehension model on the questions.

The embodiments of the present disclosure are described specifically with reference to the accompanying drawings.

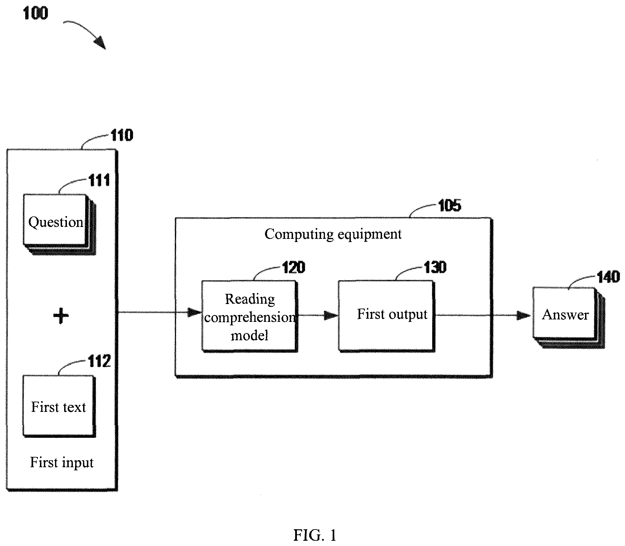

FIG. 1 shows a schematic diagram of an example environment 100 where a plurality of embodiments of the present disclosure can be implemented. It should be understood that the structure and function of the example environment 100 are described only for exemplary purpose, without implying any limitation to the scope of the present disclosure. The embodiments of the present disclosure may also be applied to environments with different structures and/or functions.

The exemplary environment 100 may include computing equipment 105. The computing equipment 105 may be configured to train and deploy the reading comprehension model 120 and perform prediction by using the reading comprehension model 120. In some embodiments, the reading comprehension model 120 may be implemented by using various models for natural language processing (NLP), including but not limited to a model based on a convolutional neural network (CNN), a model based on a recurrent neural network (RNN), a model based on a long short term memory (LSTM) artificial neural network, a model based on attention mechanism, and a model based on a transformer such as a directional encoder representation from transformer (BERT).

The reading comprehension model 120 is configured to determine a first output 130 based on a first input 110, and the first output 130 can indicate the feature of the first input 110, that is, include the feature representation of the first input 110. For example, the first input 110 may be in a form of an identifier (sometimes called token) sequence, and the first output 130 may be in a form of a vector.

The first input 110 includes a first text 112. The first text 112 may be a sentence, a paragraph, an article, a document or any other forms capable of bearing the text. In some embodiments, the first text 112 may be a descriptive text of an entity entry in a knowledge graph. In some embodiments, the first text 112 may be a descriptive text of an information event in an event graph.

The first input 110 further includes a question set 111 associated with the first text 112, and at least one question in the question set 111 can be answered by a part of the first text 112. It may be understood that not all the questions in the question set 111 can be answered by a part of the first text 112. In the first input 110, a plurality of questions in the question set 111 are spliced together to be processed by the reading comprehension model 120 together with the first text 112. In some embodiments, the plurality of questions in the question set 111 are separated by a first separation identifier, and the question set 111 and the first text 112 are separated by a second separation identifier. Therefore, through the first input 110, the plurality of questions and the corresponding first text 112 may be input into the reading comprehension model 120 simultaneously for further processing.

The first output 130 may include a feature representation of the first text 112 and a feature representation of a problem set 111. The feature representation of the question set 111 may include a feature representation of each question in the question set 111. In this specification, the feature representation may be implemented in a form of a vector or a matrix, but the present application is not limited to this.

Based on the first output 130 capable of indicating the feature of the first text 112 and the feature of each question in the question set 111, the computing equipment 105 may determine an answer 140 of each question of the question set 111 at the same time.

To facilitate clear description, the embodiments of the present disclosure are described with reference to the environment 100 in FIG. 1. It should be understood that the embodiments of the present disclosure may further include additional actions which are not shown and/or may omit the shown actions. The scope of the present disclosure is not limited in this aspect. To facilitate understanding, specific data mentioned in the following description is exemplary and does not intend to limit the protection scope of the present disclosure.

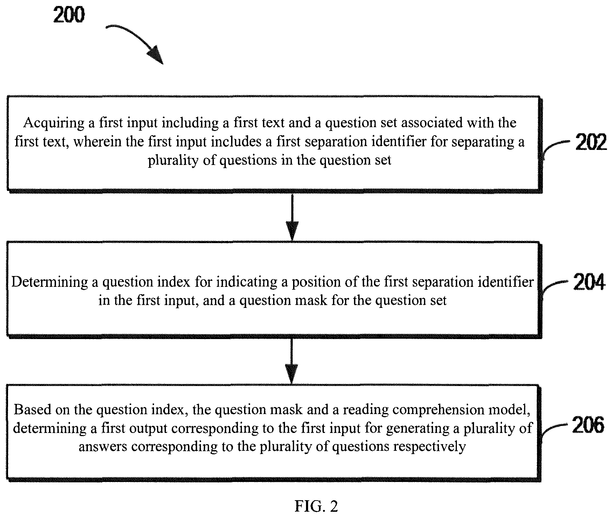

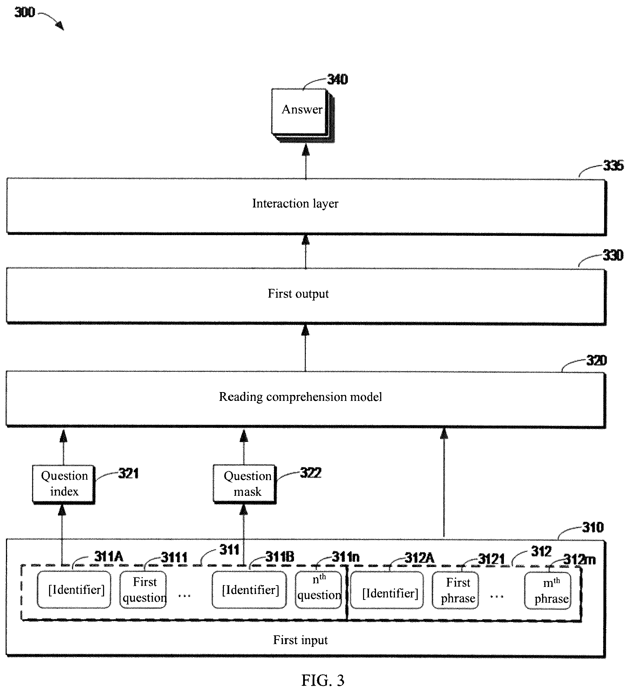

FIG. 2 shows a flowchart of a method 200 for determining an answer of a question according to some embodiments of the present disclosure. For example, the method 200 may be performed by the computing equipment 105 shown in FIG. 1. Each action of the method 200 is described in detail below in conjunction with FIG. 3.

In the box 202, the computing equipment 105 may acquire a first input including a first text and a question set associated with the first text, wherein the first input includes a first separation identifier for separating a plurality of questions in the question set.

Specifically, before processing is performed by the reading comprehension model, the first input which can be identified by the model needs to be built, which may be implemented by splicing the plurality of questions in the question set. To separate the plurality of questions and then singly identify the questions and obtain the corresponding answers, a first separation identifier may be set at the beginning of the text of each question.

Referring to FIG. 3, it is a schematic diagram of a method 300 for determining a first output according to some embodiments of the present disclosure.

The first input 310 includes a question set 311, and the question set 311 includes a first question 3111 to an n^{th} question 311n which are arranged sequentially (n is an integer greater than 1). There is a first separation identifier 311A at a position before the first question 3111. It may be understood that, although not shown, there is also a first separation identifier at a position behind the first question and before the second question. Similarly, there is a first separation identifier 311B at a position before the n^{th} problem 311n. In this way, the texts of the plurality of questions are separated through a series of first identifiers.

In some embodiments, the spliced questions also need to be further spliced with the first text to generate the first input 310. In this case, the first input 310 further includes a second separation identifier 312A different from the first separation identifier, and the second separation identifier 312A separates the first text 312 from the question set 311. In some embodiments, the first text may be divided into a plurality of phrases through participles, that is, the first phrase 3121 to the m^{th} phrase 312m (m is an integer greater than 1). Each phrase may be a character or word with clear meaning.

For example, in a specific example, the text is "company A announced to cut 350 employees in the new round of layoffs", and there are two questions in the question set associated with the text, wherein the first question is "who is the layoff party?", and the second question is "how many people are laid off?". Then it may be determined that the first input includes "[the first separation identifier] who is the layoff party? [the first separation identifier] how many people are laid off? [the second separation identifier] company A announced to cut 350 employees in the new round of layoffs". In an example, when the reading comprehension model is built based on the BERT pre-training model, the first separation identifier may be defined as a classifier token (CLS), and the second separation identifier may be defined as a sentence separator (SEP). Then the reading comprehension model may divide the first input into two sentences "[CLS] who is the layoff party? [CLS] how many people are laid off?", and "[SEP] company A announced to cut 350 employees in the new round of layoffs" for processing.

It should be understood that when the reading comprehension model is built based on other models for natural language processing, the first separation identifier and the second separation identifier may also be defined as other identifiers which can be identified by other models.

Back to the reference FIG. 2, in the box 204, the computing equipment 105 may determine a question index for indicating a position of the first separation identifier in the first input, and a question mask for the question set, wherein the question mask is configured to screen the question set in the first input.

A question index capable of indicating the position of each question in the question set (which may be indicated by the position of the first separation identifier) and a question mask which is configured to screen the question set in the first input are needed, so that the reading comprehension model can process the built first input accurately, and the texts of the plurality of questions in the question set do not interfere with each other when the reading comprehension model processes the first input.

Now referring to FIG. 3, in some embodiments, the computing equipment 105 may build a question index vector associated with a question set 311. One group of first elements in the question index vector correspond to each character included in the question set 311 and the first separation identifiers 311A and 311B, and indicate the positions of each character included in the question set 311 and the first separation identifiers. Then, the computing equipment 105 may determine a question index 321 by setting the first elements corresponding to the first separation identifiers 311A and 311B as a first value.

Then it is described based on the above specific examples that the first input includes "[the first separation identifier] who is the layoff party? [the first separation identifier] how many people are laid off? [the second separation identifier] company A announced to cut 350 employees in the new round of layoffs". The question index is configured to indicate the position of the first separation identifier in the first input, more specifically, the position in the text corresponding to the question set. The question index may be represented by a vector. In the vector, each character corresponding to the question set, and each separation identifier occupies one position, that is, an element (first element) in the vector. Therefore, the question index corresponding to the above specific examples may be represented by a vector [10000001000000000], wherein a first value 1 may be configured to identify the first separation identifier.

In some embodiments, the computing equipment 105 may build a first data item associated with the question set 311, wherein the first data item includes one group of second elements represented in rows and columns; and one group of second elements correspond to each character included in the question set 311 and the first separation identifiers 311A and 311B, and indicate the positions of each character included in the question set and the first separation identifiers 311A and 311B. Then, the computing equipment 105 may determine a plurality of second elements in one group of second elements. The plurality of second elements correspond to a plurality of characters to be masked in the question set 311. Moreover, the computing equipment 105 may determine a question mask 322 by setting the determined plurality of second elements as a second value.

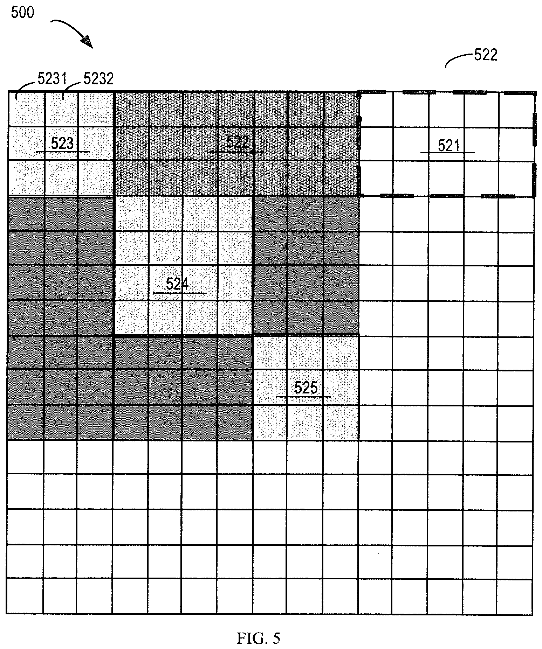

In some embodiments, the question mask may be implemented according to the form of a question mask matrix 500 shown in FIG. 5. FIG. 5 shows a schematic diagram of a specific example of a question mask matrix according to some embodiments of the present disclosure.

The question mask matrix 500 includes a plurality of elements (second elements), and the plurality of elements are arranged in the form of rows and columns. In some embodiments, the number of the rows and the number of the columns may be the same.

In the specific example corresponding to the question mask matrix 500, the question set includes three questions, wherein the first question includes two characters, the second question includes three characters, and the third question includes two characters. The first text associated with the question set includes four characters. A first separation identifier is arranged before each question, and a second separation identifier is arranged between the question set and the first text. It should be understood that according to the number of the characters included in the first text and the question set, a question mask matrix 500 generated by the computing equipment 105 may include more or less elements.

For example, for the first question, the reading comprehension model may only process an element area 523 and an element area 521 by setting values of elements in an element area 522 in the question mask matrix as a second value (for example, 0). The element area 523, for example, may correspond to the first question with two characters, and a first separation identifier associated with the first question, wherein the element 5231 indicates the first separation identifier, and the element 5232 indicates the characters included in the first question. The element area 521, for example, may correspond to the first text with four characters, and a second separation identifier associated with the first question.

In a similar way, by setting a question mask matrix, characters of the questions corresponding to the element area 524 (corresponding to the second question) and the element area 525 (corresponding to the third question) in the question mask matrix 500 will be processed by the reading comprehension model. In some embodiments, each of the element areas 523, 524 and 525 may be set as an upper triangular matrix.

In some embodiments, the computing equipment 105 may also determine a similarity among a plurality of questions, and determine a plurality of second elements needing to be masked based on the similarity (for example, greater than a preset threshold). For example, if the first question and the second question are associated with time and date respectively, the answers will be the same or similar. Thus, the computing equipment 105 may choose not to mask the characters of these questions.

In this way, for example, when the computing equipment 105 processes the first question in the question set and the first text by the reading comprehension model, the texts of other questions in the question set are invisible to the reading comprehension model by setting the question mask; and therefore, the influence on the first question by characters included in other questions after the plurality of questions are spliced together may be excluded.

Back to the reference FIG. 2, in the box 206, based on the question index, the question mask and the reading comprehension model, a first output corresponding to the first input is determined for generating a plurality of answers corresponding to the plurality of questions respectively.

Now referring to FIG. 3, the first output 330 is a feature representation for the first input determined by the reading comprehension model 320, and thus, the first output may include feature representations of the questions 3111 to 311n in the question set 311, and a feature representation of the first text 312.

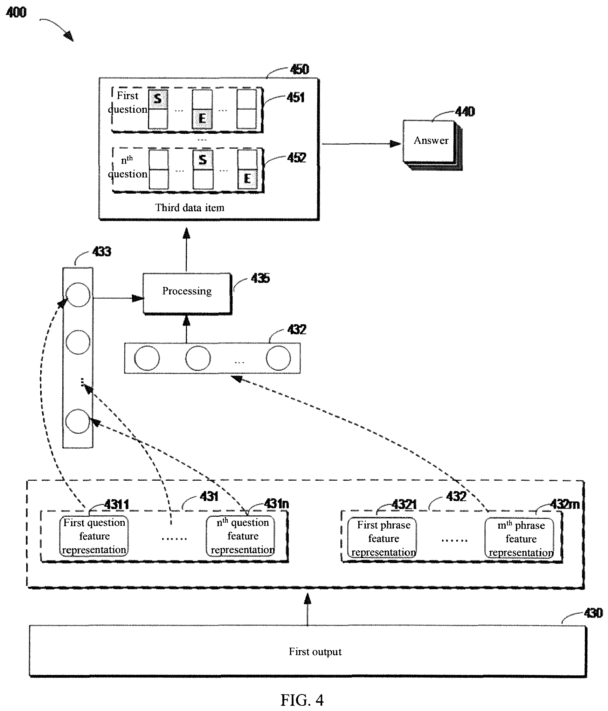

The above feature representations may determine a plurality of answers 340 corresponding to the plurality of questions respectively through processing of an interaction layer 335. A specific implementation of operation which the interaction layer 335 performs is described below with reference to FIG. 4. It may be understood that the above feature representations may be processed in a different way from that described in FIG. 4 to determine a plurality of answers represented in the text form.

In this way, the reading understanding model can process a plurality of questions for the same document at one time, thereby improving the processing efficiency of the reading comprehension model on the questions.

FIG. 4 is a schematic diagram of a method for determining an answer based on a first output according to some embodiments of the present disclosure.

The computing equipment 105 may determine a first text feature representation 432 associated with a first text, and a question set feature representation 431 associated with the question set based on the first output 430. Since the reading comprehension model processes a plurality of questions at one time, the output question set feature representation includes feature representations of a plurality of questions. Therefore, the computing equipment 105 may, based on the question index (which may indicate the positions of the plurality of questions), determine (for example, divide the question index into) question feature representations (for example, the first question feature representation 4311 to the n^{th} question feature representation 431n) associated with each question in the question set respectively in the question set feature representations 431. Next, the computing equipment 105 may generate a plurality of answers 440 based on the first text feature representation 432 and the question feature representation 431 associated with each question in the question set, for example, through processing 435.

In some embodiments, the computing equipment 105 may, based on the question feature representations 4311 to 431n associated with each question in the question set, build a second data item 433 represented in rows and columns, wherein one row in the second data item 433 corresponds to a question feature representation associated with one question in the question set. In some embodiments, the first question feature representation to the n^{th} question feature representation (4311 to 431n) may correspond to the rows in the second data item according to an order.

Then, the computing equipment 105 may determine a third data item 450 represented in rows and columns by performing processing 435, such as a first operation, on the second data item 433 and the first text feature representation 432 (for example, including a first phrase feature representation 4321 to an m^{th} phrase feature representation 4320m), wherein the third data item 450 includes a start identifier element S and an end identifier element E associated with the question set. In some embodiments, the start identifier element S and the end identifier element E both have a first value (such as 1). In some embodiments, the first operation may, for example, include the following operations: the second data item 433 and the first text feature representation 432 are subjected to element multiplication, and the obtained result is input to a neural network such as a multilayer perceptron (MLP) to perform processing 435 so as to acquire a third data item 450. The third data item 450 may serve as a pointer indicating a positional relationship between the answer and the first text.

Next, the computing equipment 105 may generate a plurality of answers based on a start identifier element and an end identifier element included in the third data item 450 and by using the first text. For example, the computing equipment 105 may identify positions of elements corresponding to a start identifier S and an end identifier E in two rows of elements 451 associated with the first question in the third data item, and find two positions corresponding to the positions of the start identifier S and the end identifier E in the first text, thereby generating a first answer (for example, by using a text between the two positions). In a similar way, the computing equipment 105 may identify positions of elements corresponding to a start identifier S and an end identifier E in two rows of elements 452 associated with the n^{th} question in the third data item, and find two positions corresponding to the positions of the start identifier S and the end identifier E in the first text, thereby generating an n^{th} answer.

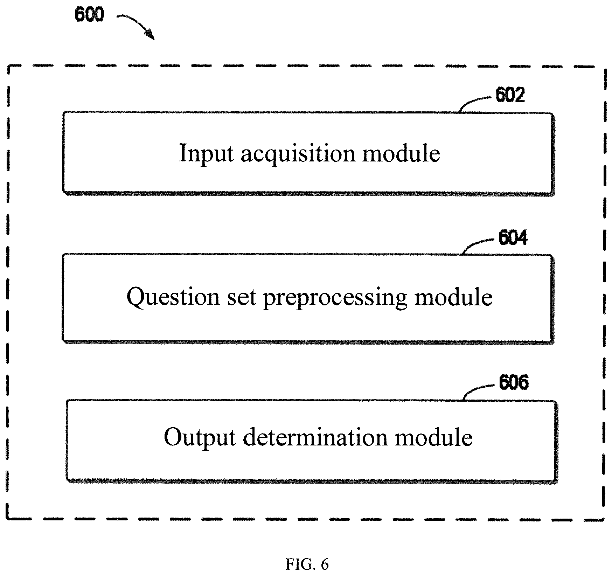

FIG. 6 is a schematic block diagram of a device 600 for determining an answer of a question according to an embodiment of the present disclosure. As shown in FIG. 6, the device 600 may include an input acquisition module 602 configured to acquire a first input including a first text and a question set associated with the first text, wherein the first input includes a first separation identifier for separating a plurality of questions in the question set. The device 600 may further include a question set preprocessing module 604 configured to determine a question index for indicating a position of the first separation identifier in the first input, and a question mask for the question set, wherein the question mask is configured to screen the question set in the first input. The device 600 may further include an output determination module 606 which is configured to, based on a question index, a question mask and a reading comprehension model, determine a first output corresponding to the first input for generating a plurality of answers corresponding to the plurality of questions respectively.

In some embodiments, the first input further includes a second separation identifier different from the first separation identifier, and the second separation identifier separates the first text from the question set.

In some embodiments, the question preprocessing module 604 further includes: a question index building module, configured to build a question index vector associated with the question set, wherein one group of first elements in the question index vector correspond to each character included in the question set and the first separation identifier, and indicate positions of each character included in the question set and the first separation identifier; and a question index determination module, configured to determine a question index by setting the first element corresponding to the first separation identifier as a first value.

In some embodiments, the question set preprocessing module 604 further includes: a first data item building module, configured to build a first data item associated with the question set, wherein the first data item includes one group of second elements represented in rows and columns, and one group of second elements correspond to each character included in the question set and the first separation identifier and indicate the positions of each character included in the question set and the first separation identifier; a second element determination module, configured to determine a plurality of second elements corresponding to each character included in the question set in one group of second elements; and a question mask determination module, configured to determine a question mask by setting a plurality of second elements as a second value.

In some embodiments, the device 600 further includes: a first feature representation determination module, configured to determine a first text feature representation associated with the first text and a question set feature representation associated with the question set based on the first output; a second feature representation determination module, configured to determine a question feature representation associated with each question in the question set respectively in the question set feature representation; and a first answer generation module, configured to generate a plurality of answers based on the first text feature representation and the question feature representation associated with each question in the question set.

In some embodiments, the answer generation module further includes: a second data item building module, configured to build a second data item represented in rows and columns based on the question feature representation associated with each question in the question set, wherein one row in the second data item corresponds to a question feature representation associated with one question in the question set; and a third data item determination module, configured to determine a third data time represented in rows and columns by performing a first operation on the second data item and the first text feature representation, wherein the third data item includes a start identifier element and an end identifier element associated with the question set. Moreover, the answer generation module is further configured to, based on the start identifier element and the end identifier element, generate a plurality of answers by using the first text.

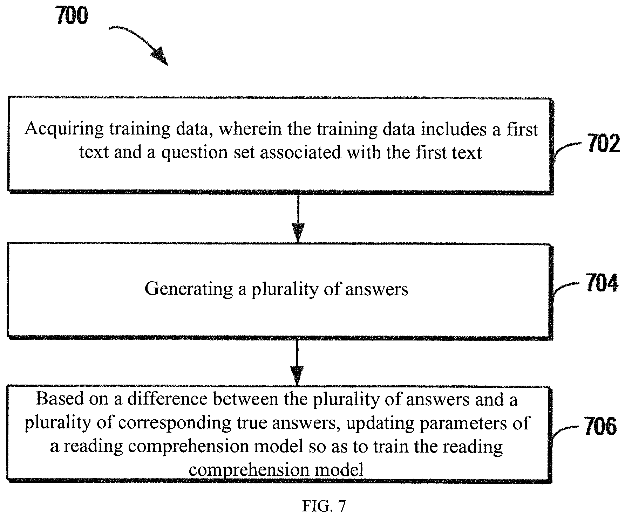

FIG. 7 is a flowchart of a method for training a reading comprehension model according to an embodiment of the present disclosure.

In the box 702, the computing equipment 105 may acquire training data, wherein the training data includes a first text, and a question set associated with the first text.

It may be understood that the training data may be prepared according to the method described in the boxes 202 and 204 with reference to FIG. 2.

In the box 704, the computing equipment 105 may generate a plurality of answers by the method described in FIG. 2 to FIG. 5.

In the box 706, the computing equipment 105 may update parameters of the reading comprehension module based on a difference between a plurality of answers and a plurality of corresponding true answers so as to train the reading comprehension model.

In this way, in the training process of the reading comprehension model, a plurality of questions based on the same document may acquire a plurality of results at one time for updating the parameters of the reading comprehension model, thereby reducing the quantity of data required by training and improving the training efficiency.

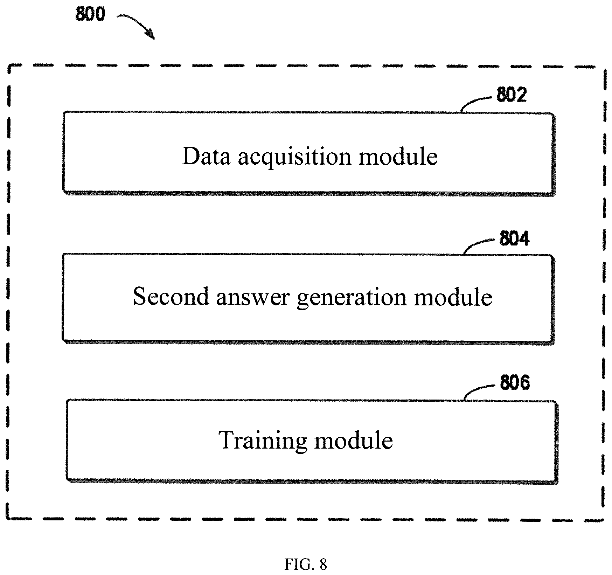

FIG. 8 is a schematic block diagram of a device for training a reading comprehension module according to an embodiment of the present disclosure. As shown in FIG. 8, the device 800 may include a data acquisition module 802 which is configured to acquire training data, wherein the training data includes a first text and a question set associated with the first text. The device 800 may further include a second answer generation module 804 which is configured to generate a plurality of answers by the method described in the aforementioned reference FIG. 2 to FIG. 5. The device 800 may further include a training module 806 which is configured to update parameters of the reading comprehension model based on a difference between a plurality of answers and a plurality of corresponding true answers so as to training the reading comprehension model.

According to the embodiment of the present application, the present application further provides electronic equipment, a computer readable storage medium and a computer program product.

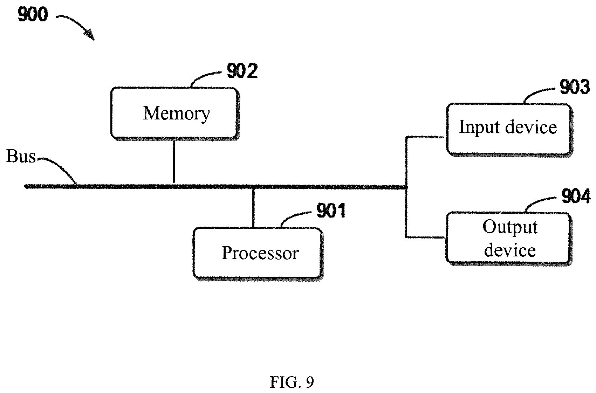

As shown in FIG. 9, it is a block diagram of electronic equipment 900 of a method for determining an answer of a question according to an embodiment of the present application. The electronic equipment is intended to represent various forms of digital computers, such as a laptop computer, a desk computer, a workbench, a personal digital assistant, a server, a blade server, a large-scale computer and other suitable computers. The electronic equipment may also represent various forms of moving devices, such as a personal digital assistant, a cell phone, a smart phone, wearable equipment and other similar computing devices. Parts, connection and a relationship between the parts, and functions of the parts shown in the specification only serve as examples, and are not intended to implementation of the present application described and/or required in the specification.

As shown in FIG. 9, the electronic equipment includes: one or more processors 901, a memory 902, and interfaces for connecting various parts, including a high-speed interface and a low-speed interface. The parts are connected with each other through different buses, and may be mounted on a public mainboard or may be mounted in other ways according to requirements. The processor may process an instruction executed in the electronic equipment, including an instruction stored in a memory or on a memory for display graph information of GUI on an external input/output device (such as display equipment coupled to an interface). In other implementation manners, if needed, a plurality of processors and/or a plurality of buses may be used together with a plurality of memories. Similarly, multiple pieces of electronic equipment may be connected, and each piece of equipment provides part of needed operation (for example, serving as a server array, one group of blade servers, or a multiprocessor system). In FIG. 9, a processor 901 is taken as an example.

The memory 902 is a non-instantaneous computer readable storage medium provided by the present application. The memory stores an instruction which may be executed by at least one processor so as to enable the at least one processor to perform the method for determining the answer of the question provided by the present application. The non-instantaneous computer readable storage medium according to the present application stores a computer instruction, and the computer instruction is configured to enable the computer to perform the method for determining the answer of the question provided by the present application.

The memory 902, as a non-instantaneous computer readable storage medium, may be configured to store a non-instantaneous software program, a non-instantaneous computer executable program and a module, such as a program instruction/module corresponding to the method for determining the answer of the question in the embodiment of the present application (for example, an input acquisition module 602, a question set preprocessing module 604 and an output determination module 606 shown in FIG. 6, and a data acquisition module 802, a second answer generation module 804 and a training module 806 shown in FIG. 8). The processor 901 operates a non-instantaneous software program, an instruction and a module stored in the memory 902 so as to perform various function applications of the server and data process, that is, to implement the method for determining the answer of the question in the above method embodiment.

The memory 902 may include a program storage area and a data storage area, wherein the program storage area may store an operating system and application programs required by at least one function; and the data storage area may store data created according to the use of the electronic equipment for determining the answer of the question. In addition, the memory 902 may include a high speed random access memory, and may further include a non-instantaneous memory such as at least one disk memory device, a flash memory device or other non-instantaneous solid-state memory devices. In some embodiments, the memory 902 optionally includes memories which are arranged remotely relative to the processor 901. These remote memories may be connected to the electronic equipment for determining the answer of the question through networks. The examples of the above networks include, but are not limited to, Internet, Intranet, local area network, mobile radio communication network and combination thereof.

The electronic equipment for the method for determining the answer of the question may further include: an input device 903 and an output device 904. The processor 901, the memory 902, the input device 903 and the output device 904 may be connected through a bus or other methods. In FIG. 9, connection through the bus is taken as an example.

The input device 903 may receive input digital or character information and generate key signal input relevant to user settings and functional control of the electronic equipment for training a phrase identification model, for example, a touch screen, a keypad, a mouse, a trackpad, a touchpad, an indicating rod, one or more mouse buttons, a trackball, a joystick, etc. The output device 904 may include display equipment, an auxiliary lighting device (such as LED) and a tactile feedback device (such as a vibrating motor), etc. The display equipment may include, but is not limited to, a liquid crystal display (LCD), a light-emitting diode (LED) display and a plasma display. In some implementation manners, the display equipment may be a touch screen.

Various implementation manners of the system and technology described herein may be implemented in a digital electronic circuit system, an integrated circuit system, an application-specific integrated circuit (ASIC), computer hardware, firmware, software and/or combinations thereof. These various implementation manners may include: implementation in one or more computer programs, wherein the one or more computer programs may be executed and/or explained on a programmable system including at least one programmable processor; and the programmable processor may be a programmable processor for special purpose or general purpose, and may receive data and an instruction from a memory system, at least one input device and at least one output device and transmit the data and the instruction into the memory system, the at least one input device and the at least one output device.

These computer programs (also known as a program, software, software application or a code) include a machine instruction of the programmable processor, and may implement these computer programs by using advanced process and/or object-oriented programming languages, and/or assembly languages/machine languages. As used herein, terms "machine readable medium" and "computer readable medium" refer to any computer program products, equipment, and/or device for providing machine instructions and/or data to the programmable processor (for example, a magnetic disk, an optical disk, a memory and a programmable logic device (PLD)), including a machine readable medium for receiving a machine instruction as a machine readable signal. The term "machine readable signal" refers to any signal for providing the machine instruction and/or data to the programmable processor.

To provide interaction with a user, the system and technology described herein may be implemented on the computer. The computer is provided with: a display device (for example, a cathode-ray tube (CRT) or a liquid crystal display (LCD) monitor) for displaying information to the user; and a keyboard and a pointing device (for example, a mouse or a trackball), wherein the user may provide input to the computer through the keyboard and the pointing device. Other types of devices may further be configured to provide interaction with the user; for example, feedback provided to the user may be sensing feedback in any forms (such as visual feedback, auditory feedback or tactile feedback); and moreover, the input from the user may be received in any forms (including sound input, voice input or touch input).

The system and technology described herein may be implemented in a computing system including a background part (for example, as a data server), or a computing system including a middleware part (for example, an application server), or a computing system including a front end part (for example, a user computer with a graphical user interface or a network browser, wherein the user may interact with the implementation manner of the system and technology described herein through the graphical user interface or the network browser), or a computing system including any combination of the background part, the middleware part or the front end part. Parts of the system may be connected to each other through digital data communication (such as a communication network) in any forms or mediums. An example of the communication network includes: a local area network (LAN), a wide area network (WAN) and Internet.

The computer system may include a client side and a server. The client side and the server are generally far away from each other and are generally interacted through the communication network. A relationship between the client side and the server is generated through computer programs which operate on the corresponding computer and mutually have a client side-server relationship.

Through the technical solutions according to the embodiments of the present application, for example, when the computing equipment processes the first question in the question set and the first text by the reading comprehension model, the texts of other questions in the question set are invisible to the reading comprehension model by setting the question mask; and therefore, the influence on the first question by characters included in other questions after the plurality of questions are spliced together may be excluded.

It should be understood that steps may be reordered, increased or deleted by using various forms of flows shown above. For example, various steps recorded in the present application may be performed concurrently or sequentially or in different orders, as long as the expected result of the technical solutions disclosed by the present application can be realized, and there is no limitation here.

The above specific implementation manners do not limit the protection scope of the present application. Those skilled in the art should understand that various modifications, combinations, sub-combinations and substitutions may be performed according to the design requirements and other factors. Any modifications, equivalent substitutions, improvements, etc. made within the spirit and principle of the present application should be included within the protection scope of the present application.

## Claims

1. A computer-implemented method for determining an answer of a question, comprising:
Acquiring (202) a first input comprising a first text and a question set associated with the first text, wherein the first input comprises a first separation identifier for separating a plurality of questions in the question set;
Determining (204) a question index for indicating a position of the first separation identifier in the first input, and a question mask for the question set, wherein the question mask is configured to screen the question set in the first input; and
based on the question index, the question mask and a reading comprehension model, determining (206) a first output corresponding to the first input for generating a plurality of answers corresponding to the plurality of questions respectively.

2. The method according to claim 1, wherein the first input further comprises a second separation identifier which is different from the first separation identifier and is configured to separate the first text from the question set.

3. The method according to claim 1 or 2, wherein determining the question index comprises:
building a question index vector associated with the question set, wherein one group of first elements in the question index vector correspond to each character comprised in the question set and the first separation identifier and indicate positions of each character comprised in the question set and the first separation identifier; and
determining the question index by setting the first element corresponding to the first separation identifier as a first value.

4. The method according to any one of claims 1 to 3, wherein determining the question mask comprises:
building a first data item associated with the question set, the first data item comprising one group of second elements represented in rows and columns, and the one group of second elements corresponding to each character comprised in the question set and the first separation identifier and indicating positions of each character comprised in the question set and the first separation identifier;
determining a plurality of second elements in the one group of second elements, the plurality of second elements corresponding to a plurality of characters to be masked in the question set; and
determining the question mask by setting the plurality of second elements as a second value.

5. The method according to claim 4, wherein determining the plurality of second elements comprises:
determining a similarity among the plurality of questions; and
determining the plurality of second elements based on the similarity.

6. The method according to any one of claims 1 to 5, further comprising:
based on the first output, determining a first text feature representation associated with the first text, and a question set feature representation associated with the question set;
based on the question index, determining question feature representations associated with each question in the question set respectively in the question set feature representation; and
based on the first text feature representation and the question feature representations associated with each question in the question set, generating the plurality of answers.

7. The method according to claim 6, wherein generating the plurality of answers comprises:
based on the question feature representations associated with each question in the question set, building a second data item represented in rows and columns, wherein one row in the second data item corresponds to the question feature representation associated with one question in the question set;
determining a third data item represented in rows and columns by performing a first operation on the second data item and the first text feature representation, the third data item comprising a start identifier element and an end identifier element associated with the question set; and
based on the start identifier element and the end identifier element, generating the plurality of answers by the first text.

8. A device for determining an answer of a question, comprising:
an input acquisition module (602), configured to acquire a first input comprising a first text and a question set associated with the first text, wherein the first input comprises a first separation identifier for separating a plurality of questions in the question set;
a question set preprocessing module (604), configured to determine a question index for indicating a position of the first separation identifier in the first input, and a question mask for the question set, wherein the question mask is configured to screen the question set in the first input; and
an output determination module (606), configured to, based on the question index, the question mask and a reading comprehension model, determine a first output corresponding to the first input for generating a plurality of answers corresponding to the plurality of questions respectively.

9. The device according to claim 8, wherein the first input further comprises a second separation identifier which is different from the first separation identifier and is configured to separate the first text from the question set.

10. The device according to claim 8 or 9, wherein the question set preprocessing module further comprises:
a question index building module, configured to build a question index vector associated with the question set, wherein one group of first elements in the question index vector correspond to each character comprised in the question set and the first separation identifier and indicate positions of each character comprised in the question set and the first separation identifier; and
a question index determination module, configured to determine the question index by setting the first element corresponding to the first separation identifier as a first value.

11. The device according to any one of claims 8 to 10, wherein the question set preprocessing module further comprises:
a first data item building module, configured to build a first data item associated with the question set, the first data item comprising one group of second elements represented in rows and columns, and the one group of second elements correspond to each character comprised in the question set and the first separation identifier and indicating positions of each character comprised in the question set and the first separation identifier;
a second element determination module, configured to determine a plurality of second elements in the one group of second elements, the plurality of second elements corresponding to a plurality of characters to be masked in the question set; and
a question mask determination module, configured to determine the question mask by setting the plurality of second elements as a second value.

12. The device according to any one of claims 8 to 11, further comprising:
a first feature representation determination module, configured to, based on the first output, determine a first text feature representation associated with the first text, and a question set feature representation associated with the question set;
a second feature representation determination module, configured to, based on the question index, determine question feature representations associated with each question in the question set respectively in the question set feature representation; and
a first answer generation module, configured to, based on the first text feature representation and the question feature representation associated with each question in the question set, generate the plurality of answers.

13. The device according to claim 12, wherein the answer generation module further comprises:
a second data item building module, configured to, based on the question feature representations associated with each question in the question set, build a second data item represented in rows and columns, wherein one row in the second data item corresponds to the question feature representation associated with one question in the question set; and
a third data item determination module, configured to determine a third data item represented in rows and columns by performing a first operation on the second data item and the first text feature representation, the third data item comprising a start identifier element and an end identifier element associated with the question set; and,
the answer generation module is further configured to, based on the start identifier element and the end identifier element, generate the plurality of answers by the first text.

14. A computer readable storage medium having computer program instructions stored thereon, wherein the computer program instructions, when executed by a processor, cause the processor to perform the method according to any one of claims 1 to 7.

15. A computer program product comprising computer program instructions, wherein the computer program instructions, when executed by a processor, cause the processor to perform the method according to any one of claims 1 to 7.
